# FASCICULE DE BREVET EUROPEEN

(11) **EP 1 131 240 B1**
(45) Date de publication et mention de la délivrance du brevet: **12.02.2003**
(21) Numéro de dépôt: 99956086.5
(22) Date de dépôt: 19.11.1999
(51) Int. Cl.: B62D 65/00

(54) **PROCEDE ET DISPOSITIF POUR LA MISE EN GEOMETRIE DES ELEMENTS DE CARROSSERIE DE LA FACE AVANT D'UN VEHICULE AUTOMOBILE**
VERFAHREN UND VORRICHTUNG ZUM GEOMETRISCHEN ANPASSEN VON KARROSSERIEELEMENTEN DER KRAFTFAHRZEUGVORDERSEITE
METHOD AND DEVICE FOR POSITIONING THE BODY ELEMENTS OF A MOTOR VEHICLE FRONT FACE

(30) Priorité: 20.11.1998 FR 9814624
(43) Date de publication de la demande: 12.09.2001
(73) Titulaire: Renault s.a.s., 92100 Boulogne Billancourt (FR)
(72) Inventeur: CASTEL, Philippe, F-78711 Mantes la Ville (FR); MEYNIER, Jean-Claude, F-78760 Ergal (FR); TETU, Yvon, F-92250 La Garenne Colombes (FR)
(86) Numéro de dépôt international: FR9902842
(87) Numéro de publication internationale: WO00030920

(56) Documents cités:
- GB-A- 2 075 437
- US-A- 4 779 336

## Description

La présente invention concerne un procédé et un dispositif pour la mise en géométrie des éléments de carrosserie reliant les deux côtés de caisse d'un véhicule automobile, et plus particulièrement un dispositif réalisant la mise en géométrie des ailes sur le véhicule et assurant le montage du capot avant avec des jeux équilibrés vis à vis des ailes.

Classiquement, les ailes d'un véhicule automobile sont montées sur la structure du véhicule au niveau d'un poste de la ligne d'assemblage à l'aide d'un dispositif positionnant précisément l'aile dans l'alignement du côté de caisse du véhicule, les autres éléments de carrosserie, tels que le capot, la calandre ou le pare-chocs, étant montés sur d'autres postes de la ligne d'assemblage à l'aide de moyens spécifiques de mise en géométrie se référençant sur la structure du véhicule.

Toutefois, la structure du véhicule résultant le plus souvent du soudage de deux côtés de caisse, d'un plancher et d'un toit, il est courant, à cause des dispersions de fabrication, d'obtenir une structure de véhicule qui ne soit pas parfaitement symétrique. Ainsi, les côtés de caisse des structures de véhicule présentent souvent un léger décalage longitudinal, invisible à l'oeil, qui s'accompagne d'un léger défaut de perpendicularité des éléments de structure transversaux, sur lesquels se rattachent les différents éléments de carrosserie, ce qui conduit à obtenir des jeux entre ces éléments de carrosserie et les côtés de caisse qui ne sont pas réguliers. Cette variation du jeu est particulièrement visible au niveau de la liaison ailes/capot qui s'étend sur une grande longueur longitudinale. En effet, les ailes étant montées dans l'alignement des côtés de caisse et le capot se référençant sur les éléments de structure transversaux du véhicule, un léger décalage longitudinal des deux côtés de caisse, provoque un défaut de parallélisme entre les bords latéraux du capot et le bord supérieur des ailes, ce qui conduit à avoir des jeux entre ces derniers augmentant ou diminuant sur la longueur du capot qui nuisent grandement à l'esthétique et à l'impression de qualité dégagée par le véhicule.

La présente invention a donc pour but de proposer un procédé et un dispositif de montage des éléments de carrosserie reliant les deux côtés de caisse qui assure des jeux équilibrés et réguliers entre les différents éléments de carrosserie, et ce même avec une structure de véhicule non parfaitement symétrique, et plus particulièrement de proposer un dispositif permettant le montage des éléments de carrosserie de la face avant du véhicule, tels que les ailes et le capot avec des jeux équilibrés et qui soit simple et économique à réaliser.

L'invention a pour objet un procédé pour la mise en géométrie des éléments de carrosserie reliant transversalement les deux côtés de caisse d'un véhicule automobile.

Selon l'invention le procédé est caractérisé en ce qu'on procède à la mise en place d'un bâti mobile sur chacun des côtés de caisse, les bâtis mobiles se référençant précisément sur les côtés de caisse et servant d'éléments support pour le positionnement d'un cadre, ce dernier se centrant entre les bâtis et servant de référentiel pour le positionnement des éléments de carrosserie reliant transversalement les deux côtés de caisse.

Selon une autre caractéristique du procédé selon l'invention, les bâtis sont mobiles selon les axes longitudinal X, transversal Y et vertical Z du véhicule, et viennent se référencer sur les côtés de caisse à l'aide d'un pion pilote coopérant avec un trou réalisé sur le côté de caisse du véhicule.

Selon une autre caractéristique du procédé, notamment utilisé pour la mise en géométrie des éléments de carrosserie de la face avant relativement aux ailes du véhicule, les bâtis mobiles comportent des moyens de positionnement du bord arrière de l'aile relativement au bord avant de la porte en regard, le cadre s'étendant à la place du capot avant en se centrant automatiquement entre les bâtis et supportant des moyens réalisant la mise en géométrie du bord supérieur des ailes selon l'axe transversal Y du véhicule.

Selon une autre caractéristique du procédé, le cadre supporte également des moyens réalisant le positionnement d'une réglette mobile supportant la gâche de fermeture avant du capot et le positionnement d'un pion pilote servant de référentiel pour l'installation du capot avant et de la planche de bord.

L'invention concerne également un dispositif pour la mise en oeuvre du procédé précédemment décrit, comportant pour chacune des ailes des moyens de positionnement du bord arrière de l'aile vis à vis du bord avant de la porte en regard, les moyens de positionnement de l'aile étant portés par un bâti venant en regard du côté de caisse, caractérisé en ce que les bâtis comportent des moyens de liaison avec un cadre servant de référentiel de positionnement aux différents éléments de carrosserie destinés à être montés à proximité des ailes.

Selon une autre caractéristique du dispositif selon l'invention, le cadre est relié à chacun des bâtis par un bras coulissant, ce dernier étant muni en son extrémité d'une tige cylindrique présentant une tête s'insérant dans une ouverture oblongue portée par le bâti et s'étendant selon l'axe transversal Y, la tête étant ajustée à la largeur de l'ouverture, les bras coulissants étant reliés entre eux par des moyens de centrage déplaçant symétriquement les bras coulissants en direction de l'axe central du véhicule jusqu'à ce que les têtes soient en butée contre l'extrémité des ouvertures.

Selon encore une autre caractéristique du dispositif selon l'invention, les moyens de centrage sont constitués d'une barre dont le centre est monté pivotant sur le cadre et dont les extrémités sont liées de façon symétrique à l'un des bras par l'intermédiaire d'une biellette, la rotation de la barre provoquant le coulissement symétrique de chacun des bras, effectuant ainsi le centrage du cadre relativement aux bâtis.

Selon encore une autre caractéristique du dispositif selon l'invention, le cadre s'étend à la place du capot avant et comporte des moyens de guidage agissant sur le bord supérieur de l'aile pour assurer le positionnement de celui-ci selon l'axe transversal Y du véhicule.

Selon un autre caractéristique du dispositif selon l'invention, le cadre supporte un plaque de guidage d'un pion pilote monté sur la structure du véhicule, ce dernier servant de référence au positionnement du capot avant, le même pion pouvant également servir de référence au positionnement de la planche de bord.

Selon un autre caractéristique du dispositif selon l'invention, le cadre supporte un doigt de guidage assurant le positionnement d'une réglette mobile supportant la gâche de fermeture de capot.

On comprendra mieux les buts, aspects et avantages de la présente invention, d'après la description présentée ci-après d'un mode de réalisation de l'invention, donné à titre d'exemple non limitatif, en se référant aux dessins annexés, dans lesquels :
- la figure 1 est une vue en perspective du dispositif de mise en géométrie selon l'invention ;
- la figure 2 est une vue de côté des moyens de mise en position du dispositif de montage d'aile de la figure 1 ;
- la figure 3 est une vue partielle en perspective du dispositif de mise en géométrie selon la flèche III de la figure 1 ;

Seuls les éléments nécessaires à la compréhension de l'invention ont été représentés. Pour faciliter la lecture des dessins les mêmes éléments portent les mêmes références d'une figure à l'autre.

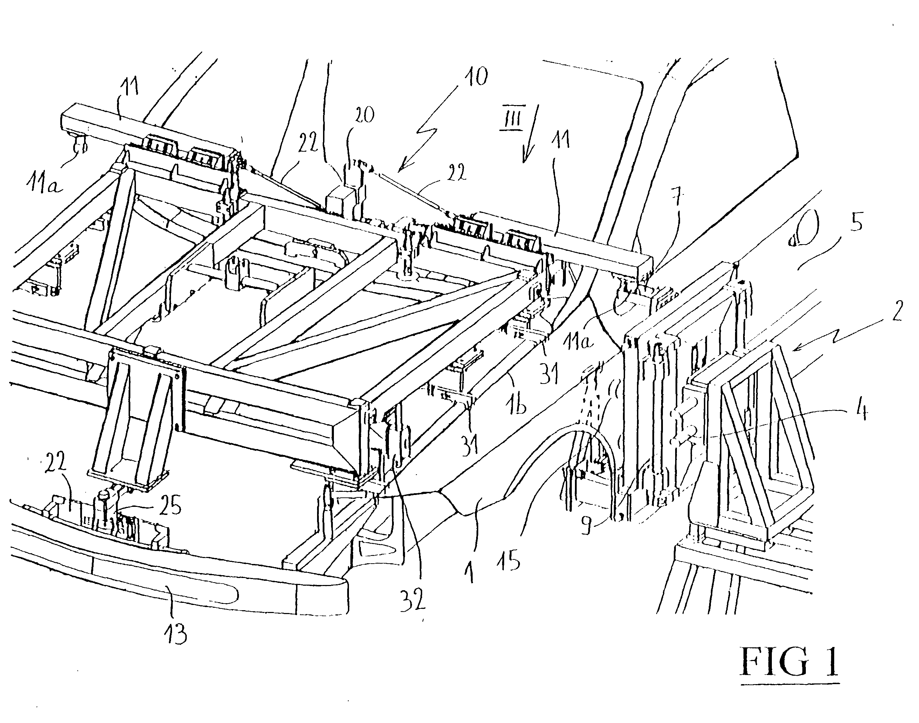

La figure 1 représente un dispositif pour la mise en géométrie des ailes 1 d'un véhicule automobile et la mise en place d'éléments de guidage assurant le positionnement correct des différents éléments de carrosserie de la face avant du véhicule.

Le dispositif de mise en géométrie comporte sur le côté gauche du véhicule, un bâti vertical 2 présentant une glissière 3 orientée selon l'axe transversal Y du véhicule, une glissière 4 orientée selon l'axe longitudinal X du véhicule et une glissière 9 orientée selon l'axe vertical Z du véhicule, les glissières 3, 4 et 9 permettant le déplacement dans l'espace du bâti vertical 2 vis à vis de la structure du véhicule.

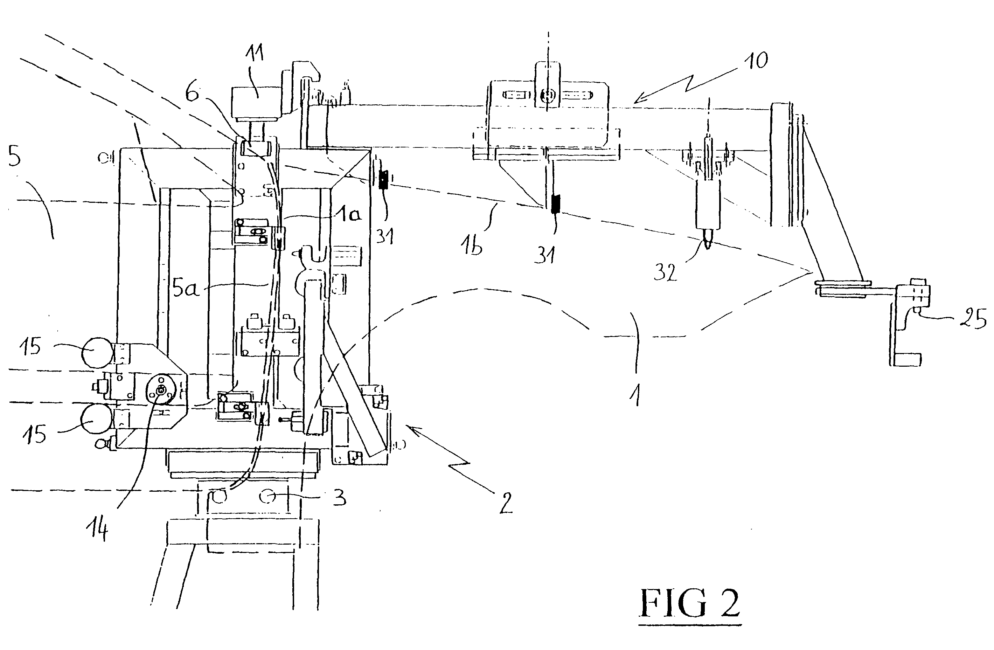

Comme on peut le voir plus précisément sur la figure 2, le bâti vertical 2 est muni de moyens de préhension, notamment des ventouses 15, et comporte un pion pilote 14 coopérant avec un trou ajusté de la porte avant 5 du véhicule pour venir se référencer par rapport à cette dernière et assurer le positionnement précis du bord arrière 1a de l'aile 1 relativement au bord avant 5a de la porte 5.

Le dispositif de mise en géométrie comprend également de façon symétrique, sur le côté droit du véhicule, un second bâti vertical 2, non représenté sur les figures, muni de moyens identiques à ceux précédemment décrits pour l'aile 1 gauche du véhicule et assurant le positionnement de l'aile 1 droite du véhicule.

La partie supérieure de chacun des deux bâtis verticaux 2, disposés de part et d'autre des côtés de caisse, comporte une patte de centrage 6 munie d'un trou oblong 7 s'étendant selon l'axe Y du véhicule et servant de point d'ancrage pour le positionnement d'un cadre 10 s'étendant à la place du capot avant du véhicule.

Le cadre 10, représenté sur la figure 1, est relié aux pattes de centrage 6 par l'intermédiaire de deux bras transversaux 11 coulissant et reliés entre eux par des moyens de centrage 20. L'extrémité des bras 11 venant en regard d'un bâti vertical 2 comporte une tige cylindrique munie d'une tête sphérique 11a venant s'insérer verticalement dans le trou oblong 7 du bâti 2, le diamètre de la tête sphérique 11a étant ajusté à la largeur du trou oblong 7 pour guider le cadre 10 dans le plan horizontal XY.

Les moyens de centrage 20 du cadre 10 sont composés d'une barre pivotant autour de son centre sur le bord arrière du cadre 10 et dont les extrémités sont reliées de façon symétrique à l'un des bras 11 par l'intermédiaire d'une biellette 22 de manière à ce que la rotation de la barre provoque le coulissement symétrique de chacun des bras 11. Un vérin hydraulique 21 est également relié à la barre pour actionner cette dernière de façon automatique.

Le cadre 10 comporte, pour chaque aile, des moyens de guidage du bord supérieur 1b de l'aile 1 constitués de deux butées transversales 31 disposées le long du bord supérieur 1b, sensiblement au tiers et au deux tiers de la longueur de l'aile 1, et d'un doigt mobile 32 venant s'insérer dans un trou de l'aile 1, disposé à proximité de l'extrémité avant de cette dernière, et exerçant une traction sur l'aile 1 en direction de l'axe central du véhicule de manière à appliquer le bord supérieur 1b de l'aile 1 contre les butées 31.

Le bord du cadre 10 venant en regard de la poutre transversale avant 13 de la structure du véhicule est muni d'un doigt de guidage 25 permettant le positionnement précis d'une réglette 22 mobile transversalement sur la poutre avant 13 du véhicule et supportant la gâche du capot avant.

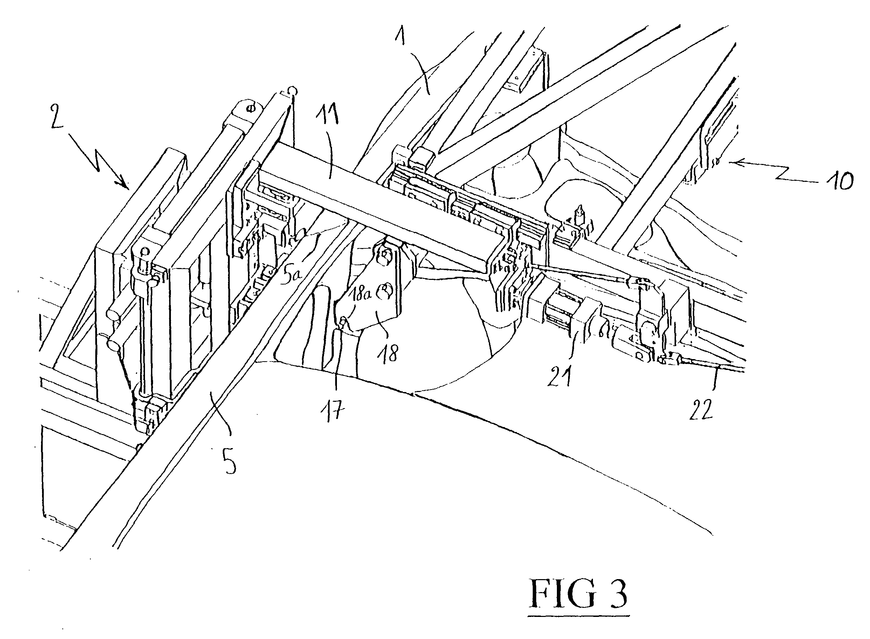

Comme on peut le voir sur la figure 3, le cadre 10 supporte également une plaque 18 comportant une encoche de guidage 18a destinée à positionner précisément un pion pilote 17 porté par la structure du véhicule et utilisé pour la mise en place précise du capot avant et de la planche de bord, non représentés sur les figures.

Le procédé de mise en géométrie des éléments de carrosserie de la face avant du véhicule va maintenant être décrit.

Le véhicule arrive au niveau du poste de mise en géométrie de la figure 1 en étant préquipé de ses portes 5 et de ses ailes 1, ses dernières ayant été montées précédemment sur un poste de la ligne d'assemblage, sans toutefois que ses vis de fixation ne soient serrées afin d'autoriser le déplacement des ailes 1 sur la structure du véhicule.

Un opérateur amène alors, de chaque côté du véhicule, le bâti vertical 2 en regard de la liaison aile/porte et insère le pion pilote 14 au travers du trou ajusté de la porte 5 de manière à positionner le bâti 2 par rapport au véhicule dans le plan vertical XZ. L'opérateur pousse ensuite sur le bâti vertical 2, en direction du véhicule, pour amener le bâti 2 en butée contre la carrosserie et immobiliser celui-ci suivant l'axe transversal Y à l'aide des ventouses 15 adhérant sur l'aile 1.

Les moyens de mise en position portés par le bâti vertical 2, tels que des pions et des butées de référence coopèrent alors avec l'aile 1 pour guider précisément le bord arrière 1a de l'aile 1 dans l'axe des côtés de caisse et dans le prolongement de la porte 5, le bord arrière la de l'aile 1 étant ensuite immobilisé par serrage des vis de fixation.

Sans modifier l'emplacement des bâtis verticaux 2, le cadre 10 est amené au dessus de l'emplacement du capot avant du véhicule et est descendu progressivement en amenant la tête sphérique 11a disposée à l'extrémité de chaque bras 11 au travers du trou oblong 7 porté par la patte de centrage 6 du bâti vertical 2 en regard.

Lors de cette descente du cadre 10 sur la structure du véhicule, le doigt de guidage 25 est inséré au travers de la réglette 22 mobile transversalement sur la poutre 13 rendant la position de cette dernière solidaire de la position du cadre 10. L'encoche de guidage 18a vient également lors, de la descente du cadre 10, s'engager automatiquement autour du pion pilote 17, ce dernier étant monté, non serré, dans un trou oblong de la structure permettant son déplacement selon l'axe transversal Y du véhicule.

Une fois les têtes 11a insérées dans les pattes de centrage 6, les moyens de centrage 20 sont actionnés à l'aide du vérin hydraulique 21, faisant coulisser les bras 11 vers l'intérieur du véhicule jusqu'à ce que les têtes sphériques 11a arrivent en butée contre l'extrémité des trous oblong 7. Le cadre 10 est alors parfaitement centré par rapport aux deux ailes 1 entraînant simultanément le positionnement précis de la réglette 22 mobile et du pion pilote 17, vis à vis des ailes 1, qui sont alors immobilisés en position par le serrage de leurs vis de fixation.

Successivement au centrage du cadre 10, les doigts mobiles 32 du cadre 10 en regard de chaque aile 1, sont insérés dans le trou du bord supérieur 1b de l'aile 1 et sont déplacés automatiquement en direction de l'axe central du véhicule de manière à appliquer le bord supérieur 1b des ailes 1 contre les butées transversales 31 du cadre 10. Une fois le bord supérieur 1b des ailes 1 bloqué transversalement contre les butées 31, les ailes 1 sont immobilisées transversalement au moyen d'agrafes de fixation.

Le cadre 10 est ensuite soulevé et les bâtis verticaux 2 écartés du véhicule de manière à permettre le déplacement du véhicule vers un poste d'assemblage, non représenté, au niveau duquel le capot est mis en place sur la structure du véhicule en référençant sa partie arrière sur le pion pilote 17 préalablement à la fixation des charnières. Le bord arrière du capot étant parfaitement centré par rapport aux ailes 1 et l'avant du capot étant maintenu en position par la gâche portée par la réglette 22 qui est elle même parfaitement positionnée par rapport aux ailes 1, les jeux entre le capot et le bord supérieur des ailes 1 deviennent ainsi parfaitement équilibrés et constants.

Par ailleurs, dans une variante du procédé de mise en géométrie selon l'invention, le pion pilote 17 peut avantageusement être utilisé pour le positionnement précis de la planche de bord relativement aux côtés de caisse afin d'obtenir des jeux entre la planche de bord et la structure du véhicule équilibrés. La réglette 22 mobile peut également servir pour le positionnement transversal du pare-chocs du véhicule de façon à ce que les jeux entre ce dernier et les ailes et le capot soient équilibrés.

Le procédé et le dispositif de mise en géométrie selon l'invention permettent donc de prendre en compte les défauts de symétrie que peut posséder la structure du véhicule, et notamment le décalage relatif des côtés de caisse, avant la mise en place des différents éléments de carrosserie tels que le capot, le pare-chocs ou la planche de bord, ce qui permet de positionner ces derniers avec des jeux bien répartis vis à vis des ailes, et d'obtenir ainsi un meilleur aspect visuel de l'assemblage.

Avantageusement, le procédé et le dispositif pour la mise en géométrie des éléments de carrosserie selon l'invention seront utilisés pour le montage d'ailes en matière plastique, telle que du NORYL, les agrafes de fixation du bord supérieur des ailes étant alors adaptées pour bloquer le déplacement de l'aile selon l'axe transversal Y et autoriser le mouvement selon l'axe longitudinal X pour permettre la dilatation et la rétraction de l'aile avec la température.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Procédé pour la mise en géométrie des éléments de carrosserie reliant transversalement les deux côtés de caisse d'un véhicule automobile, **caractérisé en ce qu'**on procède à la mise en place d'un bâti mobile (2) sur chacun des côtés de caisse, lesdits bâtis mobiles (2) se référençant précisément sur les côtés de caisse et servant d'éléments support pour le positionnement d'un cadre (10), ledit cadre (10) se centrant entre lesdits bâtis (2) et servant de référentiel pour le positionnement des éléments de carrosserie reliant transversalement les deux côtés de caisse.

2. Procédé selon la revendication 1, **caractérisé en ce que** lesdits bâtis (2) sont mobiles selon les axes longitudinal X, transversal Y et vertical Z du véhicule, et viennent se référencer sur les côtés de caisse à l'aide d'un pion pilote (14) coopérant avec un trou réalisé sur le côté de caisse du véhicule.

3. Procédé selon la revendication 2, pour la mise en géométrie des éléments de carrosserie de la face avant relativement aux ailes (1) du véhicule, **caractérisé en ce que** lesdits bâtis mobiles (2) comportent des moyens de positionnement du bord arrière (1a) de l'aile relativement au bord avant (5a) de la porte (5) en regard, ledit cadre (10) s'étendant à la place du capot avant en se centrant automatiquement entre lesdits bâtis (2) et supportant des moyens (31,32) réalisant la mise en géométrie du bord supérieure (1b) des ailes (1) selon l'axe transversale Y du véhicule.

4. Procédé selon la revendication 3, **caractérisé en ce que** ledit cadre supporte également des moyens (18,25) réalisant le positionnement d'une réglette mobile (22) supportant la gâche de fermeture avant du capot et le positionnement d'un pion pilote (17) servant de référentiel pour l'installation du capot avant et de la planche de bord.

5. Dispositif pour la mise en oeuvre du procédé selon les revendications 1 à 4, comportant pour chacune des ailes (1) des moyens de positionnement (15) du bord arrière (1a) de l'aile vis à vis du bord avant (5a) de la porte (5) en regard, lesdits moyens de positionnement (15) de l'aile (1) étant portés par un bâti (2) venant en regard du côté de caisse, **caractérisé en ce que** lesdits bâtis (2) comportent des moyens de liaison avec un cadre (10) servant de référentiel de positionnement aux différents éléments de carrosserie destinés à être montés à proximité des ailes (1).

6. Dispositif selon la revendication 5, **caractérisé en ce que** ledit cadre (10) est relié à chacun desdits bâtis (2) par un bras coulissant (11), ledit bras coulissant (11) étant muni en son extrémité d'une tige cylindrique présentant une tête (11a) s'insérant dans une ouverture oblongue (7) portée par ledit bâti (2) et s'étendant selon l'axe transversal Y, ladite tête (11a) étant ajustée à la largeur de ladite ouverture (7), lesdits bras coulissants (11) étant reliés entre eux par des moyens de centrage (20) déplaçant symétriquement lesdits bras coulissants (11) en direction de l'axe central du véhicule jusqu'à ce que lesdites têtes (11a) soient en butée contre l'extrémité desdites ouvertures (7).

7. Dispositif selon la revendication 6, **caractérisé en ce que** lesdits moyens de centrage (20) sont constitués d'une barre dont le centre est monté pivotant sur le cadre et dont les extrémités sont liées de façon symétrique à l'un desdits bras par l'intermédiaire d'une biellette (22), la rotation de ladite barre provoquant le coulissement symétrique de chacun des bras (11), effectuant ainsi le centrage dudit cadre (10) relativement auxdits bâtis (2).

8. Dispositif selon l'une quelconque des revendications 5 à 7, **caractérisé en ce que** ledit cadre (10) s'étend à la place du capot avant et comporte des moyens de guidage (31,32) agissant sur le bord supérieur (1b) de l'aile pour assurer le positionnement dudit bord (1b) selon l'axe transversal Y du véhicule.

9. Dispositif pour le montage d'un élément de carrosserie selon l'une quelconque des revendications 5 à 8, **caractérisé en ce que** ledit cadre (10) supporte un plaque (18) de guidage d'un pion pilote (17) monté sur la structure du véhicule, ledit pion pilote (17) servant de référence au positionnement du capot avant, le même pion (17) pouvant également servir de référence au positionnement de la planche de bord.

10. Dispositif pour le montage d'un élément de carrosserie selon l'une quelconque des revendications 5 à 9, **caractérisé en ce que** ledit cadre (10) supporte un doigt de guidage (25) assurant le positionnement d'une réglette mobile (22) supportant la gâche de fermeture de capot.

## Patentansprüche

1. Verfahren zur Ausrichtung von Karosseriebauteilen, die die beiden Seiten des Aufbaus eines Kraftfahrzeuges in Querrichtung verbinden, **dadurch gekennzeichnet, dass** auf jeder Seite des Aufbaus ein bewegliches Gestell (2) aufgestellt wird, wobei die beweglichen Gestelle genauen Bezug auf die Seiten des Aufbaus nehmen und als Tragteile dienen für die Positionierung eines Rahmens (10) und wobei der Rahmen (10) sich zwischen den beiden Gestellen(2) zentriert und als Bezug dient für die Positionierung der Karosseriebauteile, die die beiden Seiten des Aufbaus in Querrichtung verbinden.

2. Verfahren nach Anspruch 1, **dadurch gekennzeichnet, dass** die Gestelle (2) entlang der Längsachse X, der Querachse Y und der senkrechten Achse Z des Fahrzeugs beweglich sind und dass die Bezugnahme auf die Seiten des Aufbaus mittels eines Steuerzapfens (14) erfolgt, der mit einer Öffnung in der Seite des Aufbaus des Fahrzeugs zusammenwirkt.

3. Verfahren nach Anspruch 2 zur Ausrichtung von Karosseriebauteilen im vorderen Abschnitt relativ zu den Kotflügeln (1) des Fahrzeugs, **dadurch gekennzeichnet, dass** die beweglichen Gestelle (2) eine Anordnung zur Positionierung des rückwärtigen Randes (1a) des Kotflügels relativ zum vorderen Rand (5a) der gegenüberliegenden Tür (5) aufweist, wobei der Rahmen (10) an Stelle der vorderen Motorhaube eingesetzt wird und sich dabei automatisch zentriert zwischen den Gestellen (2) sowie Anordnungen (31,32) trägt zur Ausrichtung des oberen Randes (1b) der Kotflügel (1) entlang der Querachse Y des Fahrzeugs.

4. Verfahren nach Anspruch 3, **dadurch gekennzeichnet, dass** der Rahmen ausserdem eine Anordnung (18,25) trägt zur Positionierung einer beweglichen Leiste (22), die die vordere Verriegelung der Motorhaube trägt und zur Positionierung eines Steuerzapfens (17), der als Bezug dient für den Einbau der vorderen Motorhaube und des Armaturenbrettes.

5. Vorrichtung zur Durchführung des Verfahrens nach den Ansprüchen 1 bis 4, mit einer Anordnung zur Positionierung (15) für den rückwärtigen Rand (1a) des Kotflügels gegenüber dem vorderen Rand (5a) der gegenüberliegenden Tür (5) für jeden Kotflügel (1), wobei die Anordnung zur Positionierung (15) für den Kotflügel (1) vom Gestell (2) getragen wird, das gegenüber der Seite des Aufbaus angeordnet ist, **dadurch gekennzeichnet, dass** die Gestelle (2) eine Anordnung zur Verbindung mit einem Rahmen (10) aufweisen, der als Bezug dient für die Positionierung der verschiedenen Karosseriebauteile, die in der Nähe der Kotflügel (1) einzubauen sind.

6. Vorrichtung nach Anspruch 5,**dadurch gekennzeichnet, dass** der Rahmen (10) mit jedem der Gestelle (2) über einen Gleitarm (11) verbunden ist, wobei der Gleitarm (11) an seinem Ende mit einer zylindrischen Stange versehen ist, die einen Kopf (11a) aufweist, der in eine langgestreckte Öffnung (7) eingreift, die im Gestell (2) vorgesehen ist und sich entlang der Querachse Y erstreckt und wobei der Kopf (11a) an die Breite der Öffnung (7) angepasst ist, während die Gleitarme (11) miteinander über eine Zentrieranordnung (20) verbunden ist, die die beiden Gleitarme (11) symmetrisch in Richtung zur Mittenachse des Fahrzeugs verschiebt, bis die Köpfe (11a) am Ende der Öffnungen (7) zum Anschlag kommen.

7. Vorrichtung nach Anspruch 6, **dadurch gekennzeichnet, dass** die Zentrieranordnung (20) aus einem Stab besteht, dessen Mitte schwenkbar am Rahmen angelenkt ist und dessen Enden in symmetrischer Weise mit einem der Arme über einen Schwingarm (22) verbunden sind, wobei die Verdrehung des Stabes ein symmetrisches Gleiten der beiden Arme (11) bewirkt und damit die Zentrierung des Rahmens (10) relativ zu den Gestellen (2).

8. Vorrichtung nach einem der Ansprüche 5 bis 7, **dadurch gekennzeichnet, dass** der Rahmen (10) an Stelle der vorderen Motorhaube eingesetzt ist und eine Führungsanordnung (31,32) aufweist, die auf den oberen Rand (1b) des Kotflügels einwirkt um so die Positionierung des Randes (1b) entlang der Querachse Y des Fahrzeugs zu gewährleisten.

9. Vorrichtung zum Einbau eines Karosseriebauteils nach einem der Ansprüche 5 bis 8, **dadurch gekennzeichnet, dass** der Rahmen (10) eine Führungsplatte (18) für einen Steuerzapfen (17) trägt, der am Aufbau des Fahrzeugs befestigt ist, wobei der Führungszapfen (17) als Bezug für die Positionierung der vorderen Motorhaube dient und wobei der gleiche Zapfen (17) auch als Bezug für die Positionierung des Armaturenbrettes dienen kann.

10. Vorrichtung zum Einbau eines Karosseriebauteils nach einem der Ansprüche 5 bis 9, **dadurch gekennzeichnet, dass** der Rahmen (10) einen Führungsstift (25) trägt, der die Positionierung einer beweglichen Leiste (22) gewährleistet, die die Verriegelung der Motorhaube trägt.

## Claims

1. Method for aligning elements of bodywork transversely joining the two sides of the body of an automotive vehicle, **characterised in that** a moveable supporting structure (2) is placed at each of the sides of the body, said moveable supporting structures (2) referring precisely to the sides of the body and serving as supporting elements for the positioning of a frame (10), said frame (10) centring between said supporting structures (2) and serving as a reference for the positioning of bodywork elements transversely joining the two sides of the body.

2. Method according to claim 1, **characterised in that** said supporting structures (2) are moveable along the longitudinal X, transverse Y and vertical Z axes of the vehicle, and reference the sides of the body with the aid of a pilot guide pin (14) cooperating with a hole made on the vehicle body side.

3. Method according to claim 2, for aligning the bodywork'elements of the front face relative to the wings (1) of the vehicle, **characterised in that** said moveable supporting structures (2) comprise means for positioning the rear edge (1a) of the wing relative to the front edge (5a) of the door (5) facing it, said frame (10) extending in the place of the front bonnet, automatically centring between said supporting structures (2) and supporting the means (31, 32) implementing the alignment of the upper edge (1b) of the wings (1) according to the transverse axis Y of the vehicle.

4. Method according to claim 3, **characterised in that** said frame also supports means (18, 25) implementing the positioning of a moveable strip (22) supporting the front bonnet catch and the positioning of a pilot guide pin (17) serving as a reference system for installation of the front bonnet and the dashboard.

5. Device for implementing the method according to claims 1 to 4, comprising, for each of the wings, positioning means (15) for the rear edge (1a) of the wing with respect to the front edge (5a) of the door (5) facing it, said positioning means (15) for the wing (1) being carried by a supporting structure (2) opposite the side of the body, **characterised in that** said supporting structures (2) comprise means for joining to a frame (10) serving as a reference system for positioning different elements of bodywork intended to be mounted in the proximity of the wings (1).

6. Device according to claim 5, **characterised in that** said frame (10) is joined to each of said supporting structures (2) by a sliding arm (11), said sliding arm (11) being equipped at its end with a cylindrical rod having a head (11a) going into an oblong aperture (7) carried by said supporting structure (2) and extending along the transverse axis Y, said head (11a) being adjusted to the width of said aperture (7), said sliding arms (11) being mutually joined by centring means (20), moving said sliding arms (11) symmetrically in the direction of the central axis of the vehicle until said heads (11a) abut the extremity of said apertures (7).

7. Device according to claim 6, **characterised in that** said centring means (20) are constituted by a bar, the centre of which is mounted in a pivoting manner on the frame, and the extremities of which are joined in a symmetrical manner to one of said arms via a strip (22), the rotation of said bar causing the symmetrical sliding of each of the arms (11) thus performing the centring of said frame (10) relative to said supporting structures (2).

8. Device according to any one of claims 5 to 7, **characterised in that** said frame (10) extends in the place of the front bonnet and comprises guiding means (31, 32) acting upon the upper edge (1b) of the wing in order to ensure the positioning of said edge (1b) according to the transverse axis Y of the vehicle.

9. Device for mounting a bodywork element according to any one of claims 5 to 8, **characterised in that** said frame (10) supports a plate (18) for guiding a pilot guide pin (17) mounted on the structure of the vehicle, said pilot guide pin (17) serving as a reference for positioning the front bonnet, the same guide pin (17) also being capable of serving as a reference for positioning the dashboard.

10. Device for mounting a bodywork element according to any one of claims 5 to 9, **characterised in that** said frame (10) supports a guide post (25) ensuring the positioning of a moveable strip (22) supporting the bonnet catch.
